# EUROPEAN PATENT SPECIFICATION

(11) **EP 2 387 491 B1**
(45) Date of publication and mention of the grant of the patent: **25.05.2016**
(21) Application number: 10706351.3
(22) Date of filing: 15.01.2010
(51) Int. Cl.: B29C 44/12, B29C 31/00, B29K 105/04, B29C 44/44, B29L 7/00

(54) **METHOD FOR MOLDING PLASTIC FOAM PRODUCTS WITH INSERTS**
VERFAHREN ZUM FORMEN VON SCHAUMSTOFFPRODUKTEN MIT EINSÄTZEN
PROCÉDÉ DE MOULAGE DE PRODUITS EN MOUSSE DE MATIÈRE PLASTIQUE AVEC INSERTS

(30) Priority: 16.01.2009 IT TO20090033
(43) Date of publication of application: 23.11.2011
(73) Proprietor: Bazzica Engineering S.R.L., Frazione Matigge, Trevi (IT)
(72) Inventor: BAZZICA, Carlo, I-06032 Matigge di Trevi - Foligno (IT)
(74) Representative: Bergadano, Mirko
(86) International application number: PCT/IB2010/000066
(87) International publication number: WO 2010/082122

(56) References cited:
- EP-A- 0 767 042
- EP-A- 1 897 668
- GB-A- 1 154 685
- JP-A- H03 230 921
- US-A- 4 144 010
- US-A- 5 645 865
- US-A- 6 054 075

## Description

### TECHNICAL FIELD

The present invention relates to a method for molding plastic foam products with inserts, according to claim 1.

### BACKGROUND ART

The plastic foam material is normally an expanded polymer, such as polypropylene, polyethylene, polystyrene, and their copolymers.

A molding method of the above type is known from US-5645865, which describes a machine for molding small products with one insert.

The second sub-step on this known machine is performed by a movable member, which removes the inserts off the layout plate and simultaneously unloads onto the layout plate the finished products removed at the end of the preceding molding cycle. This machine can therefore only produce the one-insert products referred to, and definitely not multiple-insert panels, such as the polystyrene panels commonly used in the building trade to construct insulated walls, and to which the following description specifically refers purely by way of example.

Panels of the above sort normally comprise polystyrene blocks, which fit together to form a pair of facing walls, between which concrete is poured. Each panel incorporates a number of inserts, each of which defines, with a corresponding insert in the other wall, a fastener in which to insert a respective spacer, which, together with the other spacers, serves to connect the two walls integrally to each other, and to support metal bars for reinforcing the wall under construction.

The two half-molds of the above known machine remain open for as long as it takes the movable member to eject and unload the finished products onto the layout plate, and to load up and insert the next inserts into the seats.

This operating mode has many drawbacks, such as considerable downtime, and substantial energy losses, due to the length of time the half-molds are kept open.

The same drawbacks are suffered by the injection molding machine disclosed by EP0767042.

### DISCLOSURE OF INVENTION

It is an object of the present invention to provide a method of molding plastic foam products with inserts, which is cheap and easy to implement, provides for molding multiple-insert products, and eliminates the aforementioned drawbacks.

According to the present invention, there is provided a method of molding plastic foam products with inserts, as claimed in Claim 1 and preferably in any one of the following Claims depending directly or indirectly on Claim 1.

### BRIEF DESCRIPTION OF THE DRAWINGS

A non-limiting embodiment of the present invention will be described by way of example with reference to the accompanying drawings, in which:
Figure 1 shows a view in perspective of a panel with inserts, produced using the method according to the present invention;
Figure 2 shows a schematic view in perspective of a preferred embodiment of a machine implementing the method according to the present invention;
Figure 3 shows a schematic plan view of the Figure 2 machine;
Figure 4 shows a schematic view in perspective of a detail of Figure 2 in a different operating position;
Figure 5 shows a schematic plan view of the Figure 4 detail;
Figure 6 shows the Figure 3 machine in a different operating position;
Figure 7 shows the Figure 2 machine in a different operating position;
Figure 8 shows the Figure 5 detail in a different operating position;
Figure 9 shows the Figure 4 detail in a different operating position;
Figures 10 and 11 show a detail of the Figure 2 machine in different operating positions;
Figure 12 shows the Figure 5 detail in a different operating position;
Figure 13 shows the Figure 4 detail in a different operating position;
Figure 14 shows the Figure 10 detail in a different operating position;
Figure 15 shows an operating diagram of the Figure 1 machine.

### BEST MODE FOR CARRYING OUT THE INVENTION

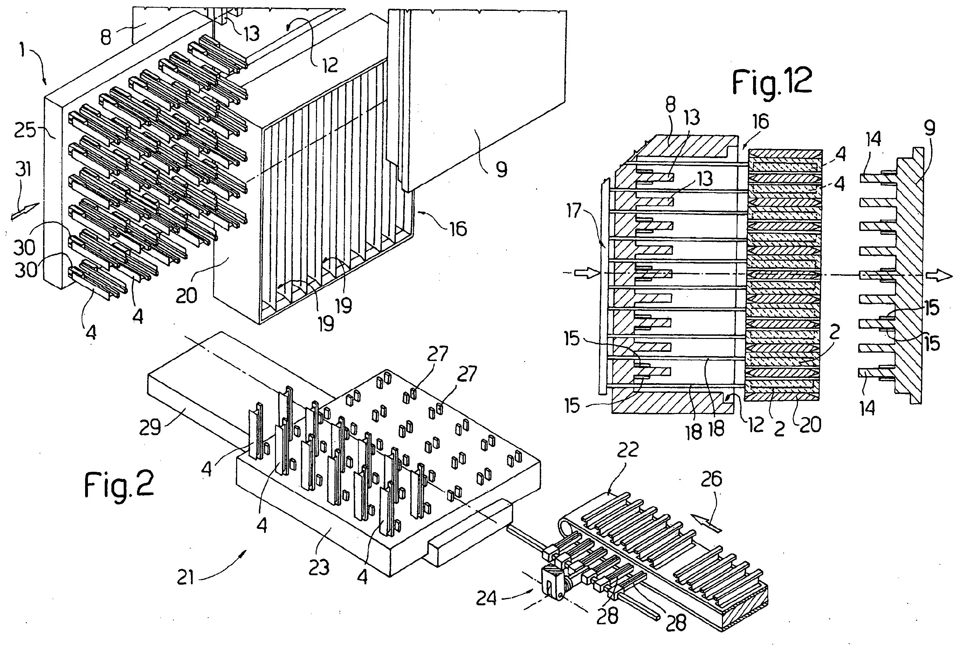

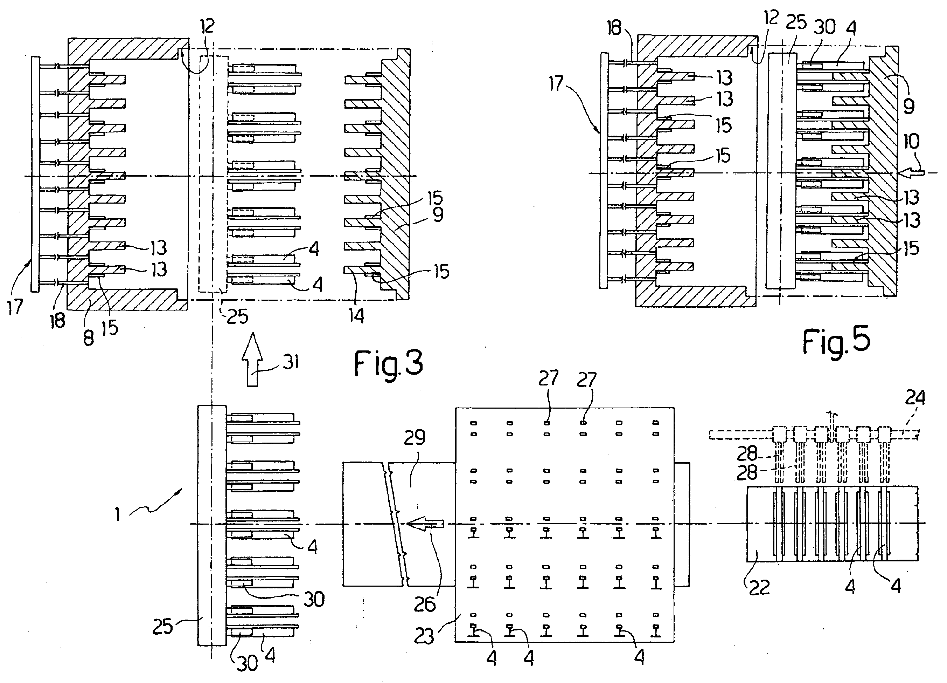

Number 1 in Figures 2 and 3 indicates as a whole a machine for molding plastic foam products, e.g. of polypropylene, polyethylene, polystyrene, and their copolymers. In the example shown, the products are panels 2 of the type commonly used to construct insulated walls.

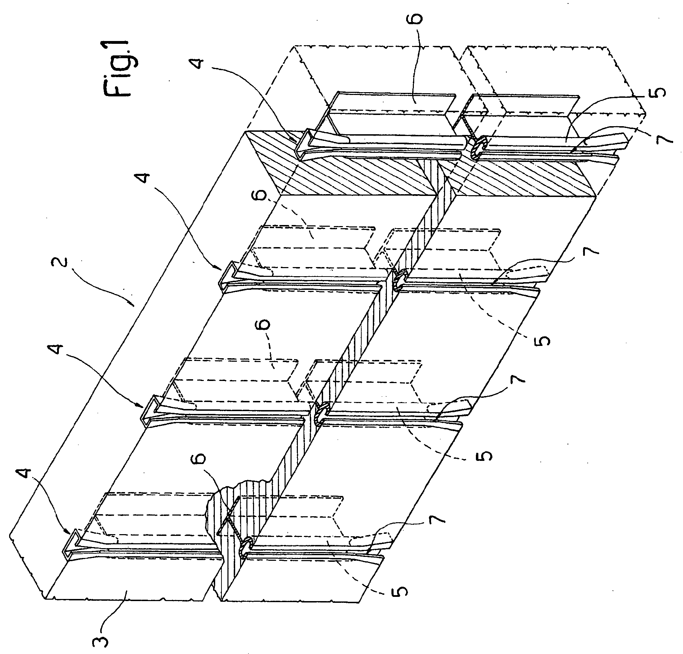

As shown in Figure 1, each panel 2 comprises a substantially parallelepiped-shaped sheet 3 of polystyrene bounded laterally by two flat major surfaces, by two sides, and by two minor surfaces perpendicular to the major surfaces and having joint elements (not shown) by which to connect sheets 3, one on top of the other, to form two facing vertical walls defining a sort of molding box in between, in which to pour concrete.

Each panel 2 incorporates a number of preferably plastic inserts 4 spaced evenly inside sheet 3, and each comprising a tubular portion 5 set inside sheet 3, close to one of the major surfaces, and secured firmly to sheet 3 by a respective T-bracket 6 extending crosswise to tubular portion 5 and through the thickness of sheet 3. Each tubular portion 5 is parallel to the other tubular portions 5, and has a longitudinal slit 7 located at said major surface and which, together with a corresponding slit 7 on the opposite wall of the molding box, serves to insert a respective known spacer (not shown) which, together with the other spacers, serves to connect the two walls integrally to each other, and to support metal bars reinforcing the wall under construction.

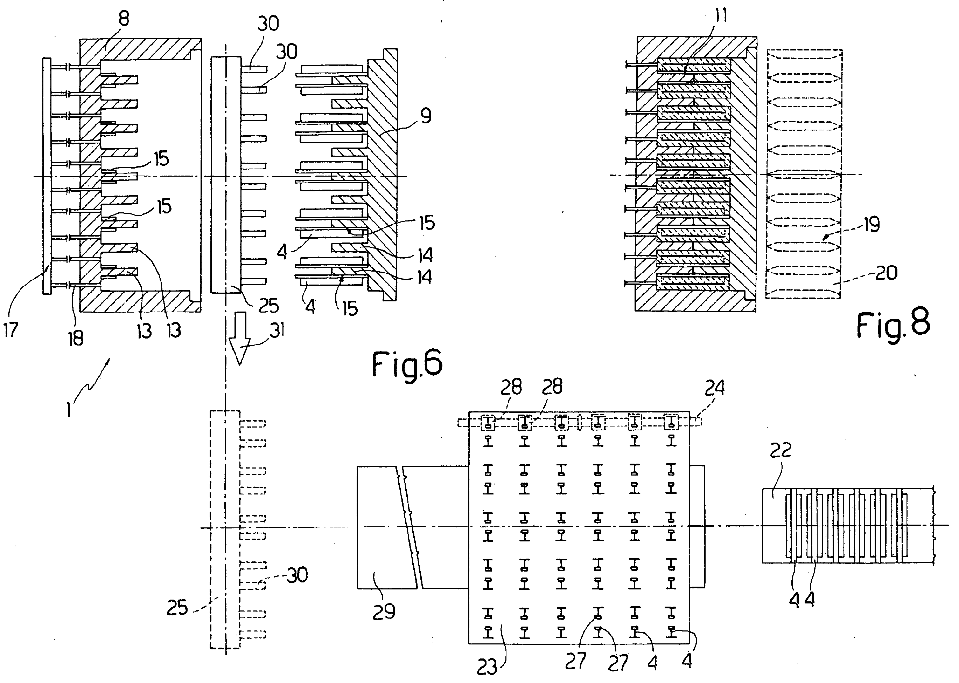

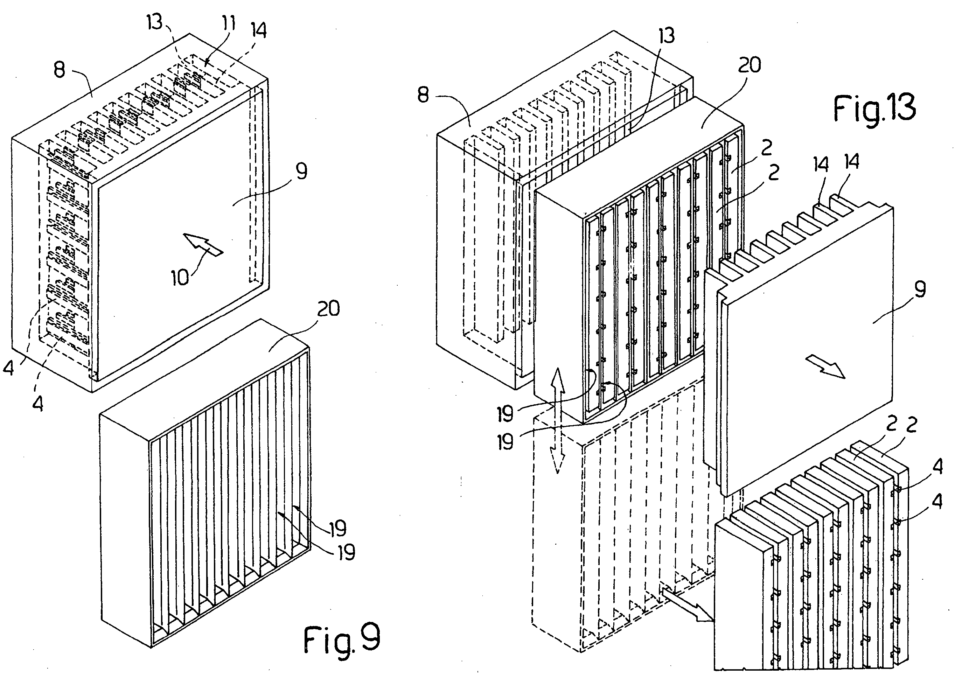

As shown in Figures 2 and 3, machine 1 comprises two half-molds 8 and 9 fitted to a frame (not shown) to move, with respect to each other and in a substantially horizontal direction 10, between an open position (Figures 2, 3), and a closed position (Figures 8, 9) in which they define a molding chamber 11.

With reference to Figure 3, half-mold 8 is defined by a substantially parallelepiped-shaped shell, which has a rectangular opening 12 on the side facing half-mold 9, and is fitted, on its end wall facing opening 12, with a number of cores 13 in the form of equally spaced vertical ribs extending longitudinally to the full height of half-mold 8, and transversely to roughly half the depth of half-mold 8.

The inside of half-mold 8 communicates, in known manner by means of a number of injection channels (not shown), with a feed line (not shown) for supplying polystyrene granules and operating fluids, such as steam to polymerize the polystyrene, cooling water, and compressed air.

Half-mold 9 is defined by a vertical plate shaped and sized to completely seal opening 12 of half-mold 8 when half-molds 8 and 9 are moved into the closed position.

On the side facing half-mold 8, half-mold 9 is fitted with cores 14 of the same shape, size and number as cores 13, and which cooperate with cores 13, when half-molds 8 and 9 are closed (Figure 9), to define a number of cavities, each of the same shape and volume as a panel 2, and which together define molding chamber 11.

In the example shown, each half-mold 8, 9 has nine cores, which means machine 1 can produce ten panels 2 simultaneously per molding cycle.

As shown in Figure 3, one of every two cores 13 and the corresponding core 14 each have a respective number of pairs of supports equally spaced along core 13, 14. The supports in each pair project transversely on opposite sides of core 13, 14, and each define a respect seat 15 designed, as explained below, to receive a respective insert 4 and hold it in place during the molding step.

In the example shown, each core 13, 14 for supporting inserts 4 has six pairs of seats 15, which means each panel 2 produced has six inserts 4 (Figure 1).

Machine 1 comprises an ejector assembly 16 for ejecting panels 2, which, once molding is completed and half-molds 8 and 9 are opened, remain inside half-mold 8.

As shown in Figures 3 and 12, ejector assembly 16 comprises an ejector device 17 associated with half-mold 8 and in turn comprising a number of ejectors 18. Ejectors 18 are mounted to alternate with cores 13, to slide through the end wall of half-mold 8, and to move, parallel to direction 10, between a withdrawn idle position (Figure 3), and a work position (Figure 12) in which ejectors 18 extend between cores 13 and through opening 12 to push panels 2 out of half-mold 8 and into respective slots 19 of an unloading device 20 which, together with ejector device 17, forms part of ejector assembly 16.

More specifically, as shown in Figure 13, device 20 for unloading panels 2 is defined by a parallelepiped-shaped box, which is bounded laterally by a tubular, rectangular-section frame, is divided internally into slots 19 by a number of partitions parallel to direction 10, and is movable vertically between a raised work position (continuous line in Figure 13) in which unloading device 20 is interposed between half-molds 8 and 9 and faces opening 12, and a lowered idle position (dash line in Figure 13) in which unloading device 20 is located below half-molds 8 and 9, and cooperates with a known take-away conveyor (not shown) for removing panels 2.

Alongside half-molds 8 and 9, machine 1 comprises a loading device 21 which, at the end of each molding step, automatically feeds all the inserts 4 simultaneously into respective seats 15, as soon as molding chamber 11 is opened and the molded panels 2 are removed.

With reference to Figures 2 and 3, loading device 21 comprises a conveyor 22 for feeding inserts 4 to a pickup station; a layout plate 23 at the pickup station; a transfer device 24 for transferring inserts 4 from conveyor 22 into given positions on layout plate 23; and a transfer plate 25 for transferring all the inserts 4 simultaneously from layout plate 23 to respective seats 15 in half-mold 9.

More specifically, conveyor 22 is a belt conveyor having a top work branch travelling in a direction 26, parallel to direction 10, to supply the pickup station with a succession of inserts 4 arranged in groups of six, with their longitudinal axes crosswise to direction 26.

Layout plate 23 is defined by a substantially square platform of the same size as half-mold 9, and the flat horizontal top surface of which is fitted with a number of fixed supports 27 integral with layout plate 23, for receiving and vertically supporting respective inserts 4, and laid out to match the layout of seats 15 in half-mold 9. More specifically, as shown in Figure 3, layout plate 23 comprises ten parallel rows of supports 27 parallel to direction 26 and arranged in pairs to form five double rows, each comprising six pairs of supports 27. Each double row corresponds to a respective core 14 with seats 15, and each pair of supports 27 corresponds to a respective pair of seats 15 on core 14.

To fit inserts 4 onto respective supports 27, transfer device 24 comprises a known cartesian manipulator with three servopowered axes, which moves between conveyor 22 and layout plate 23, and has six pickup heads 28 operated simultaneously to pick respective inserts 4 off conveyor 22, space inserts 4 apart to match the spacing of supports 27 in a given row, and fit inserts 4 axially onto respective supports 27. Depending on which row of supports 27 the inserts are to be fitted onto, pickup heads 28 are also designed to orient the group of six inserts 4 picked off conveyor 22, so that, once placed on layout plate 23 (Figure 6), the inserts 4 on each pair of supports 27 are positioned with respective tubular portions 5 facing.

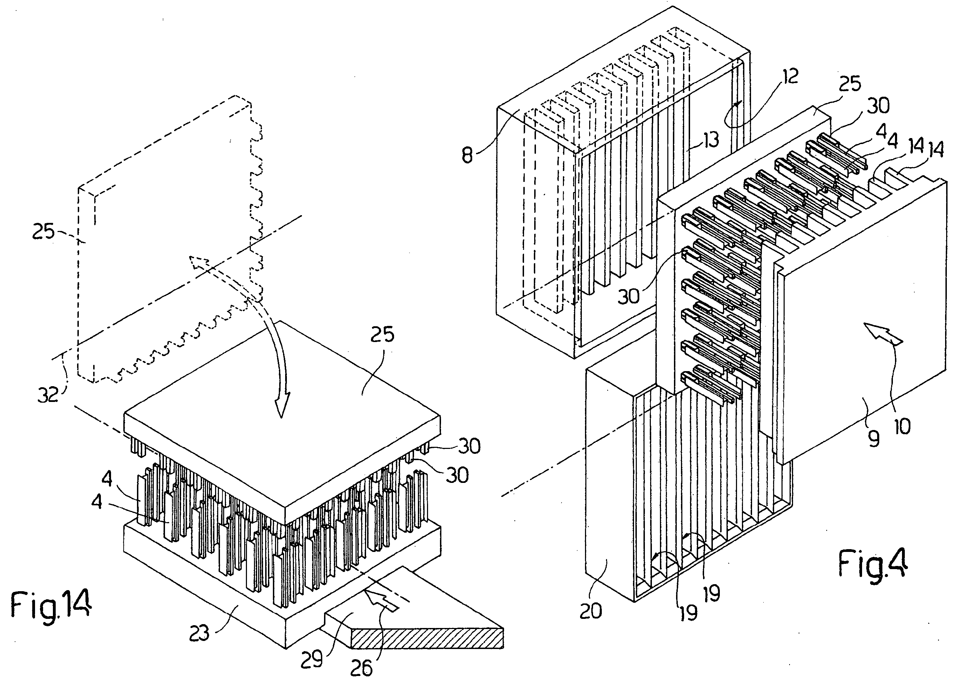

For transfer plate 25 to remove inserts 4 off layout plate 23 (as described in detail below), layout plate 23 is mounted on a runner 29 to slide, in known manner and in a direction parallel to direction 26, between a loading position (Figure 2), in which layout plate 23 is located at one end of runner 29, close to conveyor 22, and an unloading position (Figure 14), in which layout plate 23 is located at the opposite end of runner 29, close to half-molds 8 and 9.

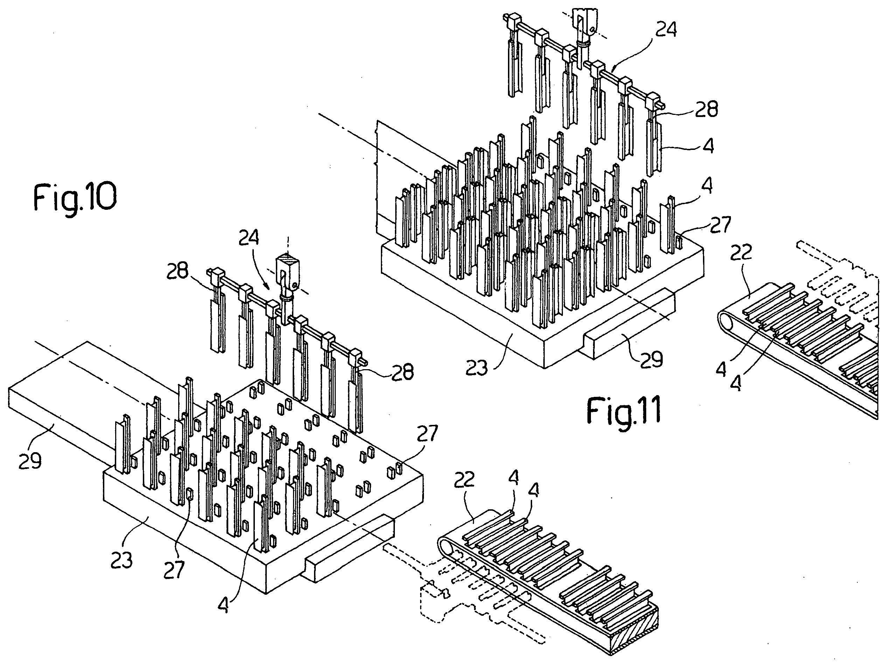

With reference to Figures 3, 5, 10 and 14, transfer plate 25 is defined by a plate of a similar shape and size as layout plate 23, and fitted, on its major lateral surface facing layout plate 23, with a number of grippers 30 laid out on transfer plate 25 with the same layout as supports 27 on layout plate 23. As stated, transfer plate 25 serves to feed all of seats 15 on half-mold 9 simultaneously with respective inserts 4 removed simultaneously off the previously loaded layout plate 23.

To perform the first of these operations, transfer plate 25 is fitted to a frame (not shown) to move, parallel to itself and in a horizontal direction 31 perpendicular to directions 10 and 26, between a normal standby position (continuous line in Figure 3), in which transfer plate 25 is vertical and located alongside half-molds 8 and 9, and a release position (Figure 5 and dash line in Figure 3), in which transfer plate 25 is vertical and located between half-molds 8 and 9, with grippers 30 facing half-mold 9 and ready to release inserts 4 into seats 15 of half-mold 9, as explained below.

As shown in Figure 14, to perform the second of the above operations, i.e. for transfer plate 25 in the standby position to remove inserts 4 directly off layout plate 23, transfer plate 25 is operated in two successive stages : a first stage, in which transfer plate 25 is rotated 90° - about an axis 32 parallel to direction 31 and extending through a bottom portion of transfer plate 25 - into a raised horizontal position, in which grippers 30 extend downwards, facing layout plate 23 already moved into the unloading position; and a second stage, in which transfer plate 25 is moved vertically downwards, crosswise to itself, into a lowered horizontal position, in which grippers 30 grip inserts 4, so as to withdraw them from respective supports 27 as transfer plate 25 is moved back into the raised horizontal position.

Operation of machine 1 will now be described as of the Figure 2 and 3 configuration, in which molding chamber 11 is open, unloading device 20 is in the lowered idle position, transfer device 24 is arranging inserts 4 on layout plate 23 in the loading position, and transfer plate 25 is loaded with inserts 4 and in the standby position.

After a given time, transfer plate 25 is operated to move into the release position (dash line in Figure 3). On reaching the release position, transfer plate 25 is arrested, and half-mold 9 is moved forward in direction 10 (Figures 4, 5), thus easing inserts 4 into respective seats 15. When inserts 4 are fully inserted inside seats 15, half-mold 9 is arrested, grippers 30 are opened, half-mold 9 with inserts 4 is backed up into its original position, and the unloaded transfer plate 25 is moved back into the standby position.

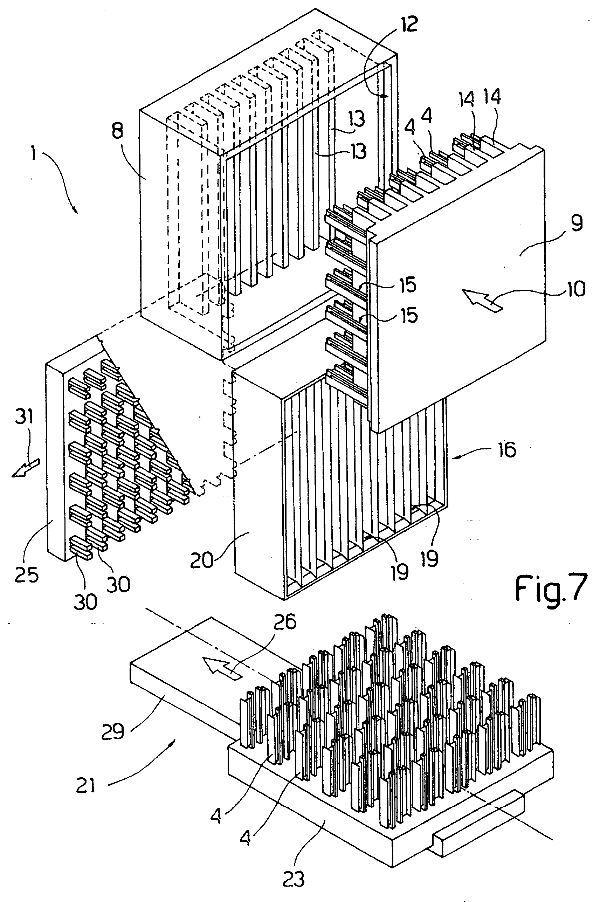

As shown in Figures 6 and 7, while transferring inserts 4 from transfer plate 25 to half-mold 9, transfer device 24 has finished loading layout plate 23 which, as transfer plate 25 is moved back into the standby position, is moved in direction 26 into the unloading position (Figure 7).

As half-molds 8 and 9 are moved into the closed position (Figures 8, 9), in which polystyrene granules and operating fluids are injected into molding chamber 11 to mold panels 2, transfer plate 25 is operated, as described above, to remove inserts 4 (Figure 14) off layout plate 23 and return to the standby position, and layout plate 23 is moved back into the loading position to be loaded with more inserts by transfer device 24.

As shown in Figures 12 and 13, once molding is completed, half-molds 8 and 9 are opened, and unloading device 20 is moved into the raised work position to cooperate with ejector device 17 and receive the ten panels 2, and is then moved back into the lowered idle position to cooperate with a further ejector device (not shown) and unload panels 2 onto a take-away conveyor (not shown).

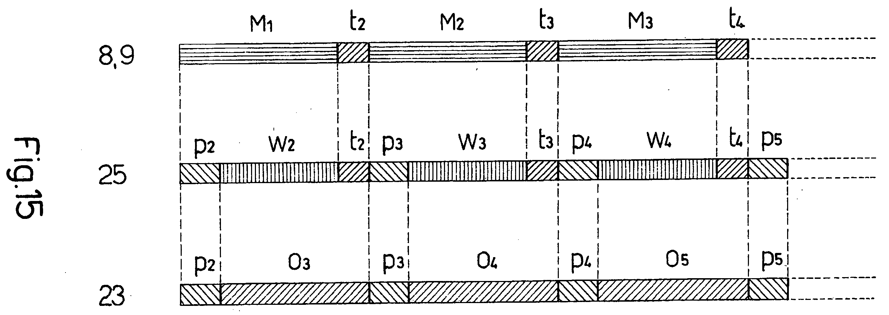

Figure 15 shows an operating diagram of machine 1 relative to a sequence of operating cycles, each comprising a layout step (indicated O), in which inserts 4 are laid out on layout plate 23; a pickup step (indicated p), in which transfer plate 25 removes inserts 4 off layout plate 23; a standby step (indicated W), in which transfer plate 25 remains in the standby position; a transfer step (indicated t), in which inserts 4 are transferred to respective seats 15; and a molding step (indicated M). Each step (and, therefore, the corresponding reference letter) is assigned a number indicating the operating cycle it forms part of.

For the sake of clarity, operation of half-molds 8, 9, transfer plate 25, and layout plate 23 in the sequence of cycles considered is shown separately in the diagram.

As shown clearly in the diagram, the operating cycles "overlap", in the sense that the molding step M₁ of cycle 1 takes place during the pickup step p₂ and standby step W₂ of cycle 2, and during part of the layout step O₃ of cycle 3.

This "overlap" provides for substantially eliminating the "downtime" caused when loading inserts 4 into half-mold 9, thus making it possible to mold a large number of panels 2 simultaneously.

## Claims

1. A method of molding plastic foam products (2) with inserts (4); the method comprising the steps of :
setting up a molding machine (1) comprising two half-molds (8, 9), each having seats (15) arranged in an orderly configuration to removably house the inserts (4); the two half-molds (8, 9) being movable with respect to each other between an open position, and a closed position in which the two half-molds (8, 9) define a molding chamber (11); and
operating the machine to perform a molding cycle comprising a loading step to load the inserts (4) into the seats (15) of one (9) of the two half-molds (8, 9) in the open position; a molding step comprising a sub-step of closing the half-molds (8, 9), and a sub-step of injecting granular plastic material between the closed half-molds (8, 9); and an unloading step to unload the molded products (2); said loading step comprising :
a first sub-step of prearranging the inserts (4) in said orderly configuration on a layout plate (23) outside the half-molds (8, 9);
a second sub-step of removing all the prearranged inserts (4) simultaneously off the layout plate (23); and
a third sub-step of transferring all the prearranged inserts (4) simultaneously to the respective seats (15);
each molding cycle overlapping a preceding and a following molding cycle, so that, in a sequence of molding cycles, the first sub-step of one molding cycle is performed at least partly during the molding step of a preceding molding cycle;
wherein the second sub-step of one molding cycle is performed while the molding step of a preceding cycle is still in progress; and
wherein the second and third sub-step are performed by a transfer plate (25), which is operated to move between a horizontal pickup position, in which the transfer plate (25) cooperates with the layout plate (23) to remove the prearranged inserts (4); a vertical standby position, in which the transfer plate (25) is located close to and outside the half-molds (8, 9); and a vertical release position, in which the transfer plate (25) is interposed between the two half-molds (8, 9), and cooperates with one (9) of the two half-molds (8, 9) to release the prearranged inserts (4) into the respective seats (15).

2. A method as claimed in Claim 1, wherein each plastic foam product (2) is a panel (2) with a number of inserts (4).

3. A method as claimed in Claim 1 or 2, wherein the third sub-step of one molding cycle is performed after the unloading step of a preceding cycle.

4. A method as claimed in any one of the foregoing Claims, wherein, for a given molding cycle, the transfer plate (25), loaded with the prearranged inserts (4), is kept in said standby position for a given length of time, during which the molding step of the preceding molding cycle and the first sub-step of the following molding cycle are being carried out.

5. A method as claimed in any one of the foregoing Claims, wherein the layout plate (23) comprises a number of fixed supports (27) arranged in said orderly configuration, and each for supporting an insert (4); the first sub-step being performed by a powered manipulator (24), which has a pickup device (28) and is operated to pick the inserts (4) off a conveyor (22) and release the inserts (4) onto respective supports (27) on the layout plate (23).

6. A method as claimed in Claim 5, wherein, during the first sub-step, the layout plate (23) is in a loading position close to said conveyor (22), and, during the second sub-step, is in an unloading position close to the transfer plate (25).

## Patentansprüche

1. Verfahren zum Formen von Schaumstoffprodukten (2) mit Einsatzteilen (4); wobei das Verfahren die folgenden Schritte umfasst:
Aufbauen einer Formungsmaschine (1), die zwei Halbformen (8, 9) umfasst, die jeweils Aufnahmen (15) aufweisen, die in einer regelmäßigen Konfiguration angeordnet sind, um die Einsatzteile (4) entnehmbar aufzunehmen; wobei die Halbformen (8, 9) relativ zueinander zwischen einer offenen Position und einer geschlossenen Position, in der die zwei Halbformen (8, 9) eine Formkammer (11) bilden, bewegt werden können; und
Betätigen der Maschine, um einen Formzyklus durchzuführen, der die folgenden Schritte umfasst: einen Ladeschritt, um in der offenen Position die Einsatzteile (4) in die Aufnahmen (15) einer (9) der zwei Halbformen (8, 9) zu laden; einen Formschritt, der einen Teilschritt des Schließens der Halbformen (8, 9) und einen Teilschritt des Einspritzens von granularem Kunststoffmaterial zwischen die geschlossenen Halbformen (8, 9) umfasst; und einen Entladeschritt, um die geformten Produkte (2) zu entladen; wobei der Ladeschritt Folgendes umfasst:
einen ersten Teilschritt des Vorbereitens der Einsatzteile (4) in der regelmäßigen Konfiguration auf einer Entwurfsplatte (23) außerhalb der Halbformen (8, 9);
einen zweiten Teilschritt des gleichzeitigen Entnehmens aller vorbereiteten Einsatzteile (4) aus der Entwurfsplatte (23); und
einen dritten Teilschritt des gleichzeitigen Übertragens aller vorbereiteten Einsatzteile (4) in die entsprechenden Aufnahmen (15);
wobei jeder Formzyklus mit einem vorhergehenden und mit einem folgenden Formzyklus überlappt, so dass in einer Folge von Formzyklen der erste Teilschritt eines Formzyklus zumindest teilweise während des Formschritts eines vorhergehenden Formzyklus durchgeführt wird;
wobei der zweite Teilschritt eines Formzyklus durchgeführt wird, während der Formschritt eines vorhergehenden Zyklus noch im Gange ist; und
wobei der zweite und der dritte Teilschritt mittels einer Umladeplatte (25) durchgeführt werden, die betrieben wird, um zwischen einer horizontalen Aufnahmeposition, in der die Umladeplatte (25) mit der Entwurfsplatte (23) zusammenwirkt, um die vorbereiteten Einsatzteile (4) zu entnehmen; einer vertikalen Bereitschaftsposition, in der die Umladeplatte (25) in der Nähe und außerhalb der Halbformen (8, 9) angeordnet ist; und einer vertikalen Freigabeposition, in der die Umladeplatte (25) zwischen den zwei Halbformen (8, 9) eingefügt ist und mit einer (9) der zwei Halbformen (8, 9) zusammenwirkt, um die vorbereiteten Einsatzteile (4) in den entsprechenden Aufnahmen (15) freizugeben, bewegt zu werden.

2. Verfahren nach Anspruch 1, wobei jedes Schaumstoffprodukt (2) einer Platte (2) mit einer Anzahl von Einsatzteilen (4) entspricht.

3. Verfahren nach Anspruch 1 oder 2, wobei der dritte Teilschritt eines Formzyklus nach dem Entladeschritt eines vorhergehenden Zyklus durchgeführt wird.

4. Verfahren nach einem der vorhergehenden Ansprüche, wobei die mit den vorbereiteten Einsatzteilen (4) beladene Umladeplatte (25) in einem vorgegebenen Formzyklus für eine vorgegebene Zeitdauer, in der der Formschritt des vorhergehenden Formzyklus und der erste Teilschritt des folgenden Formzyklus ausgeführt werden, in der Bereitschaftsposition gehalten wird.

5. Verfahren nach einem der vorhergehenden Ansprüche, wobei die Entwurfsplatte (23) eine Zahl von fest angebrachten Trägern (27) umfasst, die in der regelmäßigen Konfiguration angeordnet sind, wobei jeder ein Einsatzteil (4) trägt; wobei der erste Teilschritt mittels eines angetriebenen Manipulators (24) durchgeführt wird, der eine Aufnahmevorrichtung (28) aufweist und betrieben wird, um die Einsatzteile (4) von einer Fördervorrichtung (22) aufzunehmen und die Einsatzteile (4) auf den entsprechenden Trägern (27) auf der Entwurfsplatte (23) freizugeben.

6. Verfahren nach Anspruch 5, wobei sich die Entwurfsplatte (23) während des ersten Teilschritts in einer Ladeposition in der Nähe der Fördervorrichtung (22) befindet und während des zweiten Teilschritts in einer Entladeposition in der Nähe der Umladeplatte (25) befindet.

## Revendications

1. Procédé pour mouler des produits en plastique expansé (2) avec des inserts (4) ; le procédé comprenant les étapes consistant à :
disposer une machine de moulage (1) comprenant deux demi-moules (8, 9), ayant chacun des sièges (15) agencés dans une configuration ordonnée pour loger de manière amovible les inserts (4) ; les deux demi-moules (8, 9) étant mobiles l'un par rapport à l'autre entre une position ouverte et une position fermée dans laquelle les deux demi-moules (8, 9) définissent une chambre de moulage (11) ; et
actionner la machine pour réaliser un cycle de moulage comprenant une étape de chargement afin de charger les inserts (4) dans les sièges (15) de l'un (9) des deux demi-moules (8, 9) dans la position ouverte ; une étape de moulage comprenant une sous-étape consistant à fermer les demi-moules (8, 9) et une sous-étape consistant à injecter une matière plastique granulaire entre les demi-moules fermés (8, 9) ; et une étape de déchargement consistant à décharger les produits moulés (2) ; ladite étape de chargement comprenant :
une première sous-étape consistant à agencer au préalable les inserts (4) dans ladite configuration ordonnée sur une plaque d'agencement (23) à l'extérieur des demi-moules (8, 9) ;
une deuxième sous-étape consistant à retirer tous les inserts (4) agencés au préalable simultanément avec la plaque d'agencement (23) ; et
une troisième sous-étape consistant à transférer tous les inserts (4) agencés au préalable simultanément vers les sièges (15) respectifs,
chaque cycle de moulage chevauchant un cycle de moulage précédent et suivant, de sorte que, dans une séquence de cycles de moulage, la première sous-étape d'un cycle de moulage est réalisée au moins partiellement pendant l'étape de moulage du cycle de moulage précédent ;
dans lequel la deuxième sous-étape du cycle de moulage est réalisée alors que l'étape de moulage d'un cycle précédent est encore en cours ; et
dans lequel les deuxième et troisième sous-étapes sont réalisées par une plaque de transfert (25), qui est actionnée pour se déplacer entre une position de prise horizontale dans laquelle la plaque de transfert (25) coopère avec la plaque d'agencement (23) pour retirer les inserts (4) agencés au préalable ; une position d'attente verticale dans laquelle la plaque de transfert (25) est positionnée à proximité de et à l'extérieur des demi-moules (8, 9) ; et une position de libération verticale dans laquelle la plaque de transfert (25) est intercalée entre les deux demi-moules (8, 9) et coopère avec l'un (9) des deux demi-moules (8, 9) pour retirer les inserts (4) agencés au préalable dans les sièges (15) respectifs.

2. Procédé selon la revendication 1, dans lequel chaque produit en plastique expansé (2) est un panneau (2) avec un certain nombre d'inserts (4).

3. Procédé selon la revendication 1 ou 2, dans lequel la troisième sous-étape d'un cycle de moulage est réalisée après l'étape de déchargement d'un cycle précédent.

4. Procédé selon l'une quelconque des revendications précédentes, dans lequel, pour un cycle de moulage donné, la plaque de transfert (25) chargée avec les inserts (4) agencés au préalable, est maintenue dans ladite position d'attente pendant une durée donnée, pendant laquelle l'étape de moulage du cycle de moulage précédent et la première sous-étape du cycle de moulage suivant sont réalisées.

5. Procédé selon l'une quelconque des revendications précédentes, dans lequel la plaque d'agencement (23) comprend un certain nombre de supports fixes (27) agencés dans ladite configuration ordonnée, et chacun pour supporter un insert (4) ; la première sous-étape étant réalisée par un manipulateur motorisé (24), qui a un dispositif de prise (28) et est actionné pour prélever les inserts (4) d'un convoyeur (22) et libérer les inserts (4) sur des supports (27) respectifs sur la plaque d'agencement (23).

6. Procédé selon la revendication 5, dans lequel, pendant la première sous-étape, la plaque d'agencement (23) est dans une position de chargement à proximité dudit convoyeur (22), et pendant la deuxième sous-étape, est dans une position de déchargement à proximité de la plaque de transfert (25).
